Europäisches Patentamt

European Patent Office

Office européen des brevets

(19)

(11) Veröffentlichungsnummer: **0 231 501**
**B1**

(12)

# EUROPÄISCHE PATENTSCHRIFT

(45) Veröffentlichungstag der Patentschrift:
**18.07.90**

(21) Anmeldenummer: **86117579.2**

(22) Anmeldetag: **17.12.86**

(51) Int. Cl.⁵: **H04N 5/335**, H04N 3/15,
H04N 5/32

(54) Festkörperbildaufnahmevorrichtung.

(30) Priorität: **15.01.86 DE 3600986**

(43) Veröffentlichungstag der Anmeldung:
**12.08.87 Patentblatt 87/33**

(45) Bekanntmachung des Hinweises auf die Patenterteilung:
**18.07.90 Patentblatt 90/29**

(84) Benannte Vertragsstaaten:
**DE GB IT**

(56) Entgegenhaltungen:
US-A- 4 356 513
US-A- 4 365 269

(73) Patentinhaber: **Heimann GmbH, Weher
Köppel 6 Postfach 30 07, D-6200 Wiesbaden 1(DE)**

(72) Erfinder: **Dennhoven, Manfred, Dipl.-Ing.,
Kastanienring 13, D-5421 Osterpai(DE)**
Erfinder: **Martin, Edmund, Dipl.-Ing.,
Rüdesheimerstrasse 27, D-6203 Hochheim(DE)**

(74) Vertreter: **Fuchs, Franz-Josef, Dr.-Ing. et al,
Postfach 22 13 17, D-8000 München 22(DE)**

ACTORUM AG

**Beschreibung**

Die Erfindung betrifft eine Festkörperbildaufnahmevorrichtung gemäß dem ersten Teil des Patentanspruches.

Eine Festkörperbildaufnahmevorrichtung kann z.B. als Fernsehkamera zur Wandlung eines optischen Bildes in elektrische Signale benutzt werden. Als Festkörperbildwandler kann dabei ein CCD-Bildwandler Verwendung finden.

Es sind Festkörperbildwandler bekannt, bei denen das Signal aufeinanderfolgender Bildpunkte an verschiedenen – meist drei – Signalausgängen ansteht. Der zeitliche Versatz der Signale entspricht der Bildpunktfrequenz, d.h. der Frequenz der Bildpunkte des Einzelkanales multipliziert mit der Kanalzahl. Die Signaldauer in den einzelnen Kanälen ist aber größer als der Reziprokwert der Bildpunktfrequenz. Dies ist auch der Fall, wenn zur Auflösungserhöhung mehrere Wandler, die mit einem Bildpunktversatz montiert sind, eingesetzt werden.

Um eine optimale Bildauflösung zu erzielen, müssen die Signale der verschiedenen Signalausgänge gemultiplext werden. Dieses Multiplexen wird dadurch erschwert, daß dem Nutzsignalanteil ein bedeutend höherer Störsignalanteil überlagert ist und die zeitliche Signaldauer größer ist als die Zeit, die dem Reziprokwert der Bildpunktfrequenz entspricht. Addiert man nun die Signale der drei Signalkanäle zueinander, so findet keine optimale Nutzsignaltrennung und damit eine Reduzierung der Bildauflösung, die der Bildpunktzahl entsprechen würde, statt.

Der Erfindung liegt die Aufgabe zugrunde, eine Festkörperbildaufnahmevorrichtung der eingangs genannten Art so auszubilden, daß durch eine einfache Schaltung die Signaländerung von Bildpunkt zu Bildpunkt im Multiplexsignal erzielt ist.

Diese Aufgabe ist bei einer Festkörperbildaufnahmevorrichtung gemäß dem ersten Teil des Patentanspruches durch die Ausbildung gemäß dem zweiten Teil des Patentanspruches gelöst. Bei der Erfindung ist die Signaldauer für einen jeden Bildpunkt auf die Dauer des Reziprokwertes der Bildpunktfrequenz verkürzt. Außerdem wird das unterlegte Störsignal gleichzeitig dazu genutzt, zwischen den einzelnen Signalkanälen umzuschalten.

Die Erfindung ist nachfolgend anhand eines in der Zeichnung dargestellten Ausführungsbeispieles näher erläutert. Es zeigen:

Fig. 1 eine schematische Darstellung einer Festkörperbildaufnahmevorrichtung in einer Röntgenanlage,

Fig. 2 die für die Erfindung wesentlichen Teile einer Festkörperbildaufnahmevorrichtung nach der Erfindung, und

Fig. 3 bis 6 Kurven zur Erläuterung der Figur 2.

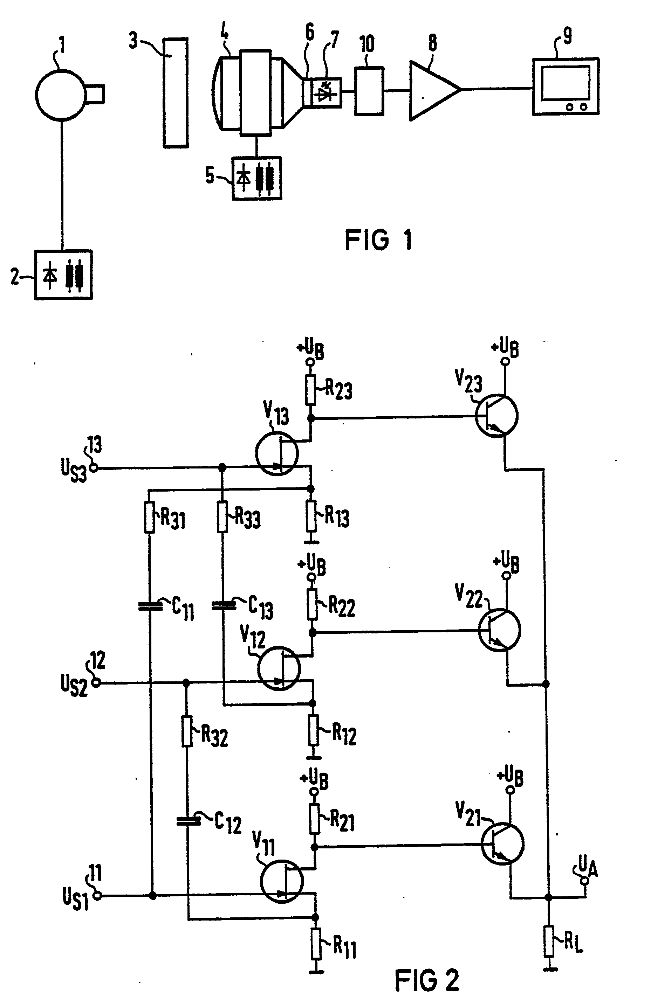

In der Figur 1 ist eine Röntgenröhre 1 dargestellt, die ein Untersuchungsobjekt 3 durchstrahlt und Röntgenbilder auf dem Eingangsleuchtschirm eines Röntgenbildverstärkers 4 erzeugt. Die Röntgenröhre 1 wird von einem Röntgengenerator 2 gespeist. Der Röntgenbildverstärker 4 wird von einer Hochspannungseinheit 5 versorgt. Die Ausgangsbilder des Röntgenbildverstärkers 4 werden über eine Phaseroptik 6 einem Festkörperbildwandler 7 mit einer Vielzahl von in einer Matrix angeordneten CCD-Wandlern zugeführt. Der Festkörperbildwandler 7 erzeugt Videosignale, die über einen Verstärker 8 die Wiedergabe des jeweils aufgenommenen Röntgenbildes auf einem Monitor 9 bewirken.

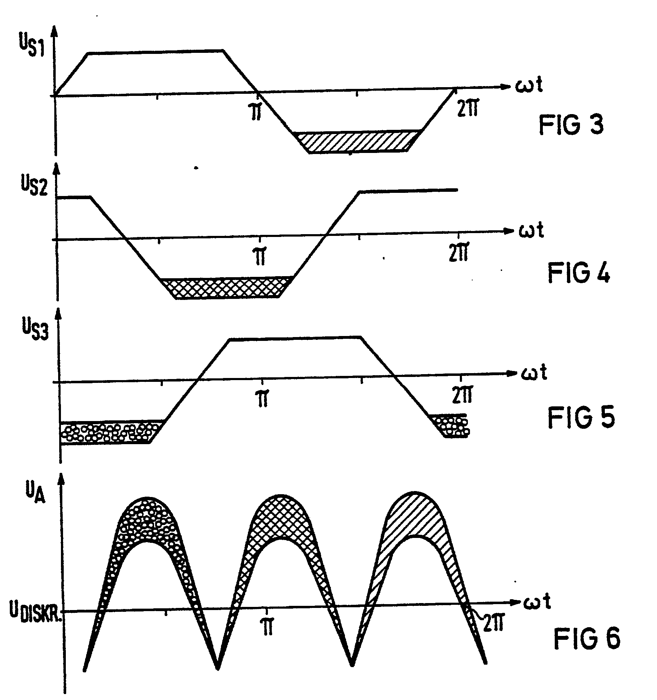

Die Figur 2 zeigt drei Eingänge 11, 12, 13 einer Bildelektronik 10, die dem Festkörperbildwandler 7 nachgeschaltet ist. Die Bildelektronik 10 hat eine Anzahl von Eingängen, die der Anzahl der Sensoren im Festkörperbildwandler 7 entspricht. An den dargestellten Eingängen 11 bis 13 liegen die Steuerspannungen $U_{S1}$, $U_{S2}$, $U_{S3}$. Diese Steuerspannungen $U_{S1}$, $U_{S2}$, $U_{S3}$ werden Verstärkerstufen $V_{11}$, $V_{12}$, $V_{13}$ an ihren jeweiligen Steuereingängen niederohmig zugeführt. In den Figuren 3 bis 5 sind beispielsweise Verläufe für die Steuerspannungen $U_{S1}$, $U_{S2}$, $U_{S3}$ dargestellt. Der Bildinhalt ist dabei negativ gerichtet und schraffiert angedeutet, der gleichspannungsmäßige Off-Set ist für alle Kanäle gleich.

Am Ausgang der Verstärkerstufen $V_{11}$, $V_{12}$, $V_{13}$ erscheint der Bildinhalt positiv gerichtet. Wegen des zeitlichen Versatzes der Steuerspannungen $U_{S1}$, $U_{S2}$, $U_{S3}$, der aus den Figuren 3, 4, 5 hervorgeht, ist derjenige Ausgang am positivsten, der gerade Bildinformation enthält.

Durch die ausgangsseitigen Verstärkerstufen $V_{21}$, $V_{22}$, $V_{23}$ werden die Ausgangsspannungen der Verstärkerstufen $V_{11}$, $V_{12}$, $V_{13}$ miteinander verglichen. Nur die am jeweils positivsten Ausgang angeschlossene Verstärkerstufe $V_{21}$, $V_{22}$, $V_{23}$ arbeitet als Emitterfolger und gibt das Signal zum Ausgang als Ausgangssignal UA weiter. Die anderen beiden sperren völlig. Die Verstärkerstufen $V_{11}$, $V_{12}$, $V_{13}$ sind durch Widerstände $R_{11}$, $R_{12}$, $R_{13}$, $R_{21}$, $R_{22}$, $R_{23}$ beschaltet und wie die Verstärkerstufen $V_{21}$, $V_{22}$, $V_{23}$ an der Betriebsspanungsquelle $U_B$ angeschlossen.

Um zeitliche Überlappungen der Bildinformation enthaltenden Phasen der drei Steuerspannungen $U_{S1}$, $U_{S2}$, $U_{S3}$ am Ausgang zu unterdrücken, wird zusätzlich jeder eingangsseitigen Verstärkerstufe $V_{11}$, $V_{12}$, $V_{13}$ am gegenkoppelnden Eingang über RC-Glieder $R_{31}$, $R_{32}$, $R_{33}$, $C_{11}$, $C_{12}$, $C_{13}$ ein jeweils differenziertes Signal des Nachbarkanales überlagert. Dadurch wird das führende Signal an jedem Ausgang der Verstärkerstufen $V_{11}$, $V_{12}$, $V_{13}$ im Übergabezeitraum zum Nachbarkanal versteilert. Da die Ablösung, d.h. das Umschalten auf eine andere Ausgangsstufe $V_{21}$, $V_{22}$, $V_{23}$ durch die Gegenkopplung schneller erfolgt, wird jeder einzelne Bildpunkt stärker hervorgehoben. Die Zeitkonstante der Gegenkopplung ist kleiner als die Periodendauer des Reziprokwertes der Bildpunktfrequenz des Einzelkanales.

Die in den Verstärkerstufen $V_{11}$, $V_{12}$, $V_{13}$ verwendeten Transistoren sollten zur Erzielung eines großen Eingangswiderstandes Feldeffekttransistoren sein, die etwa die gleiche Steilheit aufweisen. Die Verstärkung der Stufen $V_{11}$, $V_{12}$, $V_{13}$ sollte etwa "1" betragen. Die Schalttransistoren der Ver-

stärkerstufen $V_{21}$, $V_{22}$, $V_{23}$ werden zweckmäßigerweise auf dem gleichen Träger angeordnet und sperren in den Zeiten ohne Bildinhalt. Die verarbeiteten Steuerspannungen stammen zweckmäßigerweise von verschiedenen Sensoren, die mit einem Bildpunktversatz angeordnet sind. Dabei können lineare Sensoren vorgesehen sein, die mit einem Bildpunktversatz montiert sind.

**Patentansprüche**

1. Festkörperbildaufnahmevorrichtung mit einem Festkörperbildwandler (7) und einer nachgeschalteten Elektronik (10) für die Verarbeitung der in einer Vielzahl von Kanälen übertragenen Signale, bei der am Festkörperbildwandler (7) ein Multiplexer in der Elektronik (10) zur zeitlichen aufeinanderfolgenden Kanalabfrage angeschlossen ist, dadurch gekennzeichnet, daß jeder Kanal (11, 12, 13) auf einen Nachbarkanal (11, 12, 13) gegengekoppelt ist, und daß die Zeitkonstante der Gegenkopplung kleiner als die Periodendauer des Reziprokwertes der Bildpunktfrequenz des Einzelkanales ist.

**Claims**

1. Solid-state image recorder with a solid-state image converter (7) and an electronic unit (10), connected following it, for processing of the signals transmitted in a multiplicity of channels, in which a multiplexer in the electronic unit (10) is connected to the solid-state image converter (7) for the purpose of chronological channel scanning, characterised in that each channel (11, 12, 13) is negatively fed back to an adjacent channel (11, 12, 13), and in that the time constant of the negative feedback is smaller than the period of the reciprocal value of the image element frequency of the single channel.

**Revendications**

1. Dispositif de prise de vues à l'état solide comportant un convertisseur d'images à l'état solide (7) et un système électronique (10) branché en aval et servant à traiter les signaux transmis dans une multiplicité de canaux, et dans lequel un multiplexeur situé dans le système électronique (10) et servant à réaliser l'interrogation successive des canaux dans le temps est raccordé au convertisseur d'images à l'état solide (7), caractérisé par le fait que chaque canal (11, 12, 13) est couplé par contre-réaction à un canal voisin (11, 12, 13) et que la constante de temps de la contre-réaction est inférieure à la durée de la période égale à l'inverse de la fréquence des points d'image du canal individuel.

EP 0 231 501 B1

FIG 1

FIG 2

FIG 3

FIG 4

FIG 5

FIG 6